# EUROPEAN PATENT SPECIFICATION

(11) **EP 3 739 931 B1**
(45) Date of publication and mention of the grant of the patent: **28.12.2022**
(21) Application number: 18900328.8
(22) Date of filing: 12.01.2018
(51) Int. Cl.: H04B 7/06, H04B 7/08, H04W 16/14, H04W 24/00, H04W 24/02, H04W 74/08, H04W 88/08

(54) **METHOD AND DEVICE FOR TRANSMITTING INFORMATION**
VERFAHREN UND VORRICHTUNG ZUR ÜBERTRAGUNG VON INFORMATIONEN
PROCÉDÉ ET DISPOSITIF DE TRANSMISSION D'INFORMATIONS

(43) Date of publication of application: 18.11.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Novagraaf Technologies
(86) International application number: PCT/CN2018/072495
(87) International publication number: WO 2019/136721

(56) References cited:
- WO-A1-2015/081838
- WO-A1-2017/128045
- CN-A- 103 052 095
- CN-A- 105 939 187
- US-A1- 2016 066 195
- US-A1- 2016 353 481
- HUAWEI ET AL: "Coexistence and channel access for NR-based unlicensed band operation", 3GPP DRAFT; R1-1717914, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20171009 - 20171013 2 October 2017 (2017-10-02), XP051352323, Retrieved from the Internet: URL:http://www.3gpp.org/ftp/tsg_ran/WG1_RL 1/TSGR1_90b/Docs/ [retrieved on 2017-10-02]
- "3rd Generation Partnership Project; Technical Specification Group Radio Access Network; Study on Licensed-Assisted Access to Unlicensed Spectrum; (Release 13)", 3GPP STANDARD ; TECHNICAL REPORT ; 3GPP TR 36.889, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V13.0.0, 18 June 2015 (2015-06-18), pages 1-87, XP051294239, [retrieved on 2015-06-18]
- HUAWEI et al.: "Coexistence and Channel Access for NR-based Unlicensed Band Operation", 3GPP TSG RAN WG1 Meeting #91, R1-1719841, 1 December 2017 (2017-12-01), XP051369564,

## Description

### TECHNICAL FIELD

The present application relates to the field of communication technology, and in particular, to a method and a device for transmitting information.

### BACKGROUND

In the licensed-assisted access system based on long term evolution (LAA-LTE), the terminal equipment is provided services with the carrier on the licensed spectrum as the main carrier and the carrier on the unlicensed spectrum as the secondary carrier. In the unlicensed spectrum, the communication equipment follows the principle of "Listen Before Talk (LBT)", that is, the communication equipment needs to conduct channel sensing before sending signals on the unlicensed spectrum channel, and only can send signals when the channel sensing result indicates that the channel is idle. If the channel sensing result of the communication device on the channel of unlicensed spectrum indicates that the channel is busy, the communication device cannot send signals.

When new radio (NR) technology is applied to the unlicensed carrier, network equipment may use different beam directions or different signal transmission lengths for signal transmission. In this case, how to perform channel sensing for data transmission is an urgent problem to be solved. Related technologies are known from non-patent publication document 3GPP DRAFT R1-1717914 and patent publication documents US 2016066195 A1 and WO 2017128045 A1.

### SUMMARY

Embodiments of the application is directed to provide a method and a device for transmitting information being able to achieve channel sensing corresponding to a specific direction, thereby facilitating to improve probability of successful sensing. The invention is set out in the appended set of claims. The following aspects and implementation manners are provided for illustrative purposes.

According to a first aspect, there is provided a method for transmitting information, including: performing, by a network device, channel sensing on an unlicensed carrier corresponding to a first direction to evaluate availability of a first time domain resource to be used by the network device for sending first information; and
sending, by the network device, the first information through the first time domain resource when the first time domain resource is available.

In a possible implementation manner, before performing, by the network device, channel sensing on the unlicensed carrier corresponding to the first direction, the method further includes:
performing, by the network device, channel sensing on the unlicensed carrier, and a result of the channel sensing indicates that the unlicensed carrier is occupied.

In a possible implementation manner, performing, by the network device, channel sensing on the unlicensed carrier corresponding to the first direction includes:
performing, by the network device, channel sensing on the unlicensed carrier corresponding to the first direction according to at least one of:
a service priority corresponding to the first direction, a transmission power corresponding to the first direction, an energy detection threshold corresponding to the first direction, and a time length for data transmission corresponding to the first direction.

In a possible implementation manner, performing, by the network device, channel sensing on the unlicensed carrier corresponding to the first direction includes:
performing, by the network device, channel sensing on the unlicensed carrier through a first precoding, wherein the first precoding corresponds to the first direction.

In a possible implementation manner, the first information includes a first physical channel, and sending, by the network device, the first information through the first time domain resource includes:
sending, by the network device, the first physical channel on the unlicensed carrier through a second precoding and the first time domain resource, wherein the second precoding corresponds to the first direction.

In a possible implementation manner, the first information includes a first measurement reference signal, and sending, by the network device, the first information through the first time domain resource includes:
sending, by the network device, the first measurement reference signal on the unlicensed carrier through a third precoding and the first time domain resource, wherein the third precoding does not correspond to the first direction.

In a possible implementation manner, the method further includes:
performing, by the network device, channel sensing on the unlicensed carrier corresponding to a second direction to evaluate availability of a second time domain resource to be used by the network device for sending second information; and
sending, by the network device, the second information through the second time domain resource when the second time domain resource is available.

In a possible implementation manner, performing, by the network device, channel sensing on the unlicensed carrier corresponding to the second direction includes:
performing, by the network device, channel sensing on the unlicensed carrier corresponding to the second direction according to at least one of:
a service priority corresponding to the second direction, a transmission power corresponding to the second direction, an energy detection threshold corresponding to the second direction, and a time length for data transmission corresponding to the second direction.

In a possible implementation manner, before performing, by the network device, channel sensing on the unlicensed carrier corresponding to the second direction, the method further includes:
performing, by the network device, channel sensing on the unlicensed carrier corresponding to the first direction, and a result of the channel sensing indicates that the unlicensed carrier is occupied corresponding to the first direction.

In a possible implementation manner, the method further includes:
when a channel access priority corresponding to the second direction is same as a channel access priority corresponding to the first direction, performing, by the network device, channel sensing on the unlicensed carrier corresponding to the second direction subsequent to performing, by the network device, channel sensing on the unlicensed carrier corresponding to the first direction; or
when the channel access priority corresponding to the second direction is higher than the channel access priority corresponding to the first direction, performing, by the network device, channel sensing on the unlicensed carrier corresponding to the second direction subsequent to performing, by the network device, channel sensing on the unlicensed carrier corresponding to the first direction, or restarting, by the network device, channel sensing on the unlicensed carrier corresponding to the second direction; or,
when the channel access priority corresponding to the second direction is lower than the channel access priority corresponding to the first direction, restarting, by the network device, channel sensing on the unlicensed carrier corresponding to the second direction.

According to a second aspect, there is provided a device for transmitting information, configured to perform the method according to the first aspect or any possible implementation manner thereof. Specifically, the device includes a unit configured to perform the method according to the first aspect or any possible implementation manner thereof.

According to a third aspect, there is provided an apparatus for transmitting information. The apparatus includes: a memory, a processor, an input interface, and an output interface. In an embodiment, the memory, processor, input interface and output interface are connected through a bus system. The memory is configured to store instructions, and the processor is configured to execute the instructions stored in the memory, so as to perform the method according to the first aspect or any possible implementation manner thereof.

According to a fourth aspect, there is provided a computer storage medium for storing computer software instructions, which are used for implementing the method according to the first aspect or any possible implementation manner thereof, and the medium includes a program designed to perform the forgoing method.

According to a fifth aspect, there is provided a computer program product including instructions which, when executed on a computer, causes the computer to implement the method according to the first aspect or any possible implementation manner thereof.

### BRIEF DESCRIPTION OF THE DRAWINGS

FIG. 1 is a schematic diagram illustrating a communication system according to an embodiment of the present application.
FIG. 2 is a schematic flowchart illustrating a method for transmitting information according to an embodiment of the present application.
FIG. 3 is a schematic diagram illustrating an example of the method for transmitting information according to an embodiment of the present application.
FIG. 4 is a block diagram illustrating a device for transmitting information according to an embodiment of the present application.
FIG. 5 is a block diagram illustrating a device for transmitting information according to another embodiment of the present application.

### DETAILED DESCRIPTION

The technical solutions in this application will be described below with reference to the drawings.

The terms "component", "module", "system" and the like used in this specification are indicative of computer-related entities, hardware, firmware, a combination of hardware and software, software, or software in execution. For example, a component may be, but is not limited to, a process running on a processor, a processor, an object, an executable file, an execution thread, a program, and/or a computer. By way of illustration, both the application running on the computing device and the computing device may be components. One or more components may reside in a process and/or an execution thread, and the components may be localized on one computer and/or distributed on two or more computers. In addition, these components may be implemented by various computer readable medium having various data structures stored thereon. The components may, for example, communicate through local and/or remote processes based on a signal having one or more data packets (e.g., data of two components from interaction with another component in a local system, a distributed system, and/or a network, such as the Internet that interacts with other systems through signals).

It should be understood that the embodiments of the present application may be applied to various communication systems, for example, Global System of Mobile Communication (GSM), Code Division Multiple Access (CDMA) system, Wideband Code Division Multiple Access (WCDMA) system, General Packet Radio Service (GPRS), Long Term Evolution (LTE) system, advanced long term evolution (LTE-A) system, LTE-based access to unlicensed spectrum (LTE-U) system, New Radio (NR) system and evolution system of NR system, such as NR-based access to unlicensed spectrum (NR-U) system, Universal Mobile Telecommunication System (UMTS), Wireless Local Area Networks (WLAN), Wireless Fidelity (WiFi) or next-generation communication systems and the like.

Generally speaking, traditional communication systems support a limited number of connections and are easy for implementation. However, with the development of communication technologies, mobile communication systems will not only support traditional communication, but also support, for example, device to device (D2D) communication, Machine to Machine (M2M) communication, Machine Type Communication (MTC), and Vehicle to Vehicle (V2V) communication.

The communication system in the embodiments of the present application may be applied to a carrier aggregation (CA) scenario, a dual connectivity (DC) scenario, or a standalone (SA) networking scenario.

When the communication system in the embodiments of the present application is applied to an unlicensed spectrum and the networking scenario is CA, the CA networking scenario may be that the primary carrier is on the licensed spectrum, the secondary carrier is on the unlicensed spectrum, and the primary carrier and the secondary carrier are connected via ideal backhaul.

When the communication system in the embodiments of the present application is applied to an unlicensed spectrum and the networking scenario is DC, the DC networking scenario may be that the primary carrier is on the licensed spectrum, the secondary carrier is on the unlicensed spectrum, and the primary carrier and the secondary carrier are connected via non-ideal backhaul. The system on the primary carrier and the system on the secondary carrier may belong to different systems. For example, the system on the primary carrier is an LTE system, and the system on the secondary carrier is an NR system. Alternatively, the system on the primary carrier may also belong to the same system as the system on the secondary carrier. For example, the systems on the primary carrier and the secondary carrier are both LTE systems or NR systems.

When the communication system in the embodiments of the present application is applied to an unlicensed spectrum and the networking scenario is SA, the terminal device may access the network through the system on the unlicensed spectrum.

The embodiments of the present application are described with reference to network device and terminal device.

The terminal device may also be referred to as user equipment (UE), access terminal, subscriber unit, user station, mobile station, mobile site, remote station, remote terminal, mobile device, user terminal, terminal, wireless communication device, user agent or user device. The terminal device may be a station (ST) in WLAN, or may be a cellular phone, a cordless phone, a Session Initiation Protocol (SIP) phone, a Wireless Local Loop (WLL) station, a personal digital processing (PDA) device, a handheld device with wireless communication capabilities, a computing device, other processing devices connected to wireless modems, an in-vehicle devices, a wearable device, or next-generation communication system device, such as a terminal device in the fifth-generation communications (5G) network or in the public land mobile network (PLMN) network that evolves in the future.

As an example without limitation, in the embodiments of the present application, the terminal device may also be a wearable device. The Wearable device may also be referred to as a wearable smart device, which is a general term for wearable devices applying intelligence technology to everyday wear, such as glasses, gloves, watches, clothing and shoes. The wearable device may be a portable device that is worn directly on the body or integrated into the user's clothes or accessories. The wearable device may not only a hardware device, but may also achieve powerful functions through software support, data interaction, and cloud interaction. Generalized wearable smart devices may be full-featured, large-sized, and may achieve complete or partial functions independent of smartphones, such as smart watches or smart glasses. Generalized wearable smart devices may only focus on a certain type of application functions, and need to cooperate with other devices such as smartphones, for example, various smart bracelets and smart jewelry for body monitoring.

The network device may be a device for communicating with a mobile device, and may be an access point (AP) in WLAN, a base transceiver station (BTS) in GSM or CDMA, or a NodeB (NB) in WCDMA, and may also be an evolutional Node B (eNB or eNodeB) in LTE, or a relay station or an access point, or a vehicle-mounted device, a wearable device, and a network device in the future 5G network or in the evolved PLMN network, or the like.

In the embodiments of the present application, the network device provides services for the cell. The terminal device may communicate with the network device through transmission resources (for example, frequency domain resources or spectrum resources) used in the cell. The cell may be a cell corresponding to the network device (e.g., a base station). The cell may belong to a macro base station or a base station corresponding to a small cell. The small cell herein may include a metro cell, a micro cell, a pico cell, a femto cells, and the like. These small cells have the characteristics of small coverage and low transmission power, and are suitable for providing high-speed data transmission services.

In the embodiments of the present application, multiple cells may work on the same frequency at the same time on carriers in LTE system or 5G system. In some special scenarios, the concepts of the carrier and the cell may be considered equivalent. For example, in the carrier aggregation (CA) scenario, when a secondary carrier is configured for a UE, a carrier index of the secondary carrier and a cell identify (Cell ID) of a secondary cell working on the secondary carrier are carried at the same time. In such case, the concept of carrier and cell may be considered equivalent, for example, UE accessing a carrier is equivalent to accessing a cell.

The method and device provided in the embodiments of the present application may be applied to a terminal device or a network device. The terminal device or network device includes a hardware layer, an operating system layer running on the hardware layer, and an application layer running on the operating system layer. The hardware layer includes hardware such as a central processing unit (CPU), a memory management unit (MMU), a memory (also called main memory) and the like. The operating system may be any one or more computer operating systems that implement processes through processes, for example, Linux operating system, Unix operating system, Android operating system, iOS operating system, windows operating system, or the like. The application layer includes applications such as browsers, address books, word processing software, instant messaging software and the like. In addition, the embodiments of the present application does not specifically limit the specific structure of the execution body of the method provided in the embodiments of the present application, as long as it can run the program that records instructions for implementing the method provided in the embodiments of the present application, so as to perform communication according to the method provided in the embodiments of the present application. For example, the execution body of the method provided in the embodiments of the present application may be a terminal device or a network device, or a functional module in the terminal device or network device that can call and execute a program.

In addition, various aspects or features of the embodiments of the present application may be implemented as methods, devices, or products using standard programming and/or engineering techniques. The term " product" as used in this application encompasses a computer program accessible from any computer-readable device, carrier, or medium. For example, the computer-readable medium may include, but is not limited to, magnetic storage devices (for example, hard disks, floppy disks, magnetic tapes, or the like), optical disks (for example, compact discs (CD), digital versatile discs (DVD), or the like), smart cards and flash memory devices (for example, Erasable Programmable Read-Only Memory (EPROM), cards, sticks or key drives, or the like). In addition, the various storage medium described herein may represent one or more devices and/or other machine-readable medium for storing information. The term "machine-readable medium" may include, but is not limited to, wireless channels and other various medium capable of storing, containing, and/or carrying instructions and/or data.

It should be noted that, the downlink physical channel may include PDCCH (Physical Downlink Control Channel), EPDCCH (Enhanced Physical Downlink Control Channel), and PDSCH (Physical Downlink Shared Channel), PHICH (Physical Hybrid ARQ Indicator Channel), PMCH (Physical Multicast Channel), PBCH (Physical Broadcast Channel), and the like. The downlink reference signal may include a downlink synchronization signal, a PT-RS (Phase Tracking Reference Signal), a DMRS (Demodulation Reference Signal), a CSI-RS (Channel State Information -Reference Signal), and the like. Herein, the downlink synchronization signal may be used by a communication device for network accessing and radio resource management measurement, the downlink DMRS may be used for demodulation of the downlink channel, the CSI-RS may be used for downlink channel measurement, and the PT- RS may be used for downlink time-frequency synchronization or phase tracking. It should be understood that the embodiments of the present application may include downlink physical channels or downlink reference signals with the same name and different functions as described above, and may also include downlink physical channels or downlink reference signals with different names and the same functions as described above. The application is not limited thereto.

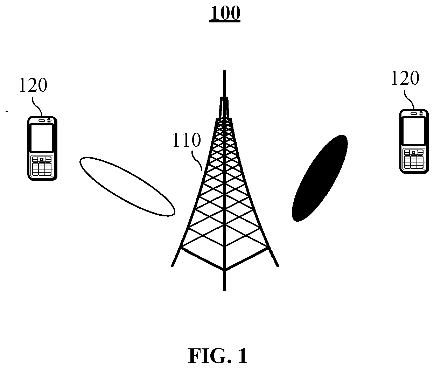

FIG. 1 is a schematic diagram illustrating a communication system according to an embodiment of the present application. As shown in FIG. 1, the communication system 100 includes a network device 110 and a terminal device 120.

The network device 110 may be any implementation manner of the foregoing network devices, and the terminal device 120 may be any implementation manner of the foregoing terminal devices, which will not be repeated here.

It should be understood that the communication system 100 may be a PLMN network, a D2D network, an M2M network, or other networks. FIG. 1 is only a simplified schematic diagram of an example, and the network may also include other network devices, which are not shown in FIG. 1.

The frequency domain resources used for wireless communication in the embodiments of the present application will be described in detail below.

In the embodiments of the present application, the frequency domain resources used by the network device and the terminal device for wireless communication (for example, uplink transmission or downlink transmission) are frequency domain resources used based on a contention mechanism.

For example, the network device and/or the terminal device may detect whether a frequency domain resource with a certain bandwidth (e.g., 20 MHz) is currently in an idle state, in other words, whether the frequency domain resource is used by other devices.

If the frequency domain resource is in the idle state, or in other words, the frequency domain resource is not used by other devices, the network device and/or the terminal device may use the frequency domain resource for communication, for example, for uplink transmission or downlink transmission.

If the frequency domain resource is not in the idle state, or in other words, the frequency domain resource is already used by other devices, the network device and/or the terminal device cannot use the frequency domain resource.

By way of example without limitation, in the embodiments of the present application, the frequency domain resource used by the communication system 100 (or in other words, the frequency domain resource used by the network device and the terminal device based on the contention mechanism) may also be licensed spectrum resource, that is, the communication system 100 in the embodiments of the present application is a communication system capable of using a licensed frequency band, and each communication device (network device and/or terminal device) in the communication system 100 may use the frequency domain resource of the licensed frequency band in a competitive manner.

The "licensed frequency domain resource" may also be referred to as "licensed spectrum resource" or "licensed carrier", which refers to frequency domain resources that can be used only after approval by the national or local wireless committee. The licensed frequency domain resource cannot be shared between different systems such as LTE system and WiFi system, or, between systems of different service providers.

The licensed spectrum resources may be delineated by the government's radio management committee and have special-purpose spectrum resources, such as those used by mobile operators, civil aviation, railways, and police. Due to policy exclusivity, the service quality of the licensed spectrum resources can be generally guaranteed, and it is relatively easy to perform scheduling control.

Optionally, in the embodiments of the present application, the frequency domain resource used by the communication system 100 (or in other words, the frequency domain resource used by the network device and the terminal device based on the competition mechanism) may be unlicensed frequency domain resource.

The "unlicensed frequency domain resource" may also be referred to as "unlicensed spectrum resource" or "unlicensed carrier", which refers to resources on unlicensed frequency bands that can be shared by respective communication devices. In an embodiment, the "resources on unlicensed frequency bands that can be shared" may refer to a situation as follow. Restrictions on use of a specific frequency spectrum may be defined only in some indicators such as the transmission power and out-of-band leakage, so as to ensure basic coexistence requirements are met between multiple devices that jointly use the frequency band. Service provides may use unlicensed frequency band resources to achieve the purpose of network capacity distribution, but need to comply with the regulatory requirements for unlicensed frequency band resources in different regions and different spectrums. These requirements are usually formulated to protect public systems such as radar, and to ensure that multiple systems do not cause harmful effects and coexist with each other as much as possible, including transmit power limits, out-of-band leakage indicators, indoor and outdoor use restrictions, and some additional coexistence strategies in certain regions. For example, respective communication devices may utilize the frequency domain resource by adopting a contention manner or a listening method, for example, using a method specified by LBT.

The unlicensed spectrum resource may be a spectrum resource delineated by relevant government departments, without limiting the radio technology, operating companies, and service life, and without guarantying service quality of the frequency band. Communication devices using the unlicensed spectrum resources only need to meet the requirements of indicators such as transmission power and out-of-band leakage for free use. Typical systems that use unlicensed spectrum resources for communication include the Wi-Fi system.

As an example without limitation, in the embodiments of the present application, the unlicensed spectrum resource may include a frequency band around 5 Giga Hertz (GHz), a frequency band around 2.4 GHz, a frequency band around 3.5 GHz, a frequency band around 37 GHz , and a frequency band around 60GHz.

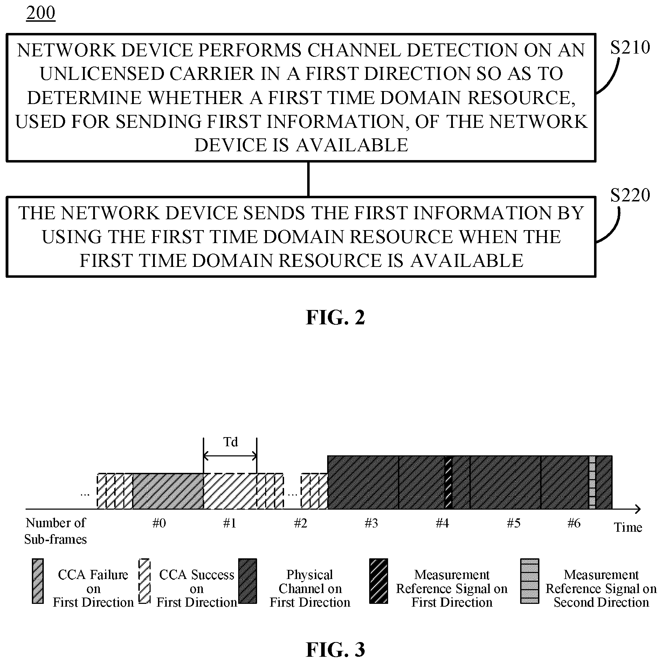

The following describes the method for transmitting information method according to an embodiment of the present application with reference to FIGs. 2 to 3. It should be understood that FIGs. 2 to 3 are schematic flowcharts of the method for transmitting information method according to an embodiment of the present application, illustrating detailed communication steps or operations of the method, but these steps or operations are only examples. The embodiments of the present application may also include other operations or variations of various operations in FIGs. 2 to 3.

In addition, the steps in FIGs. 2 to 3 may be performed in a different order from that shown in FIGs. 2 to 3, and it may not be necessary to perform all the operations in FIGs. 2 to 3.

FIG. 2 is a schematic flowchart illustrating a method 200 for transmitting information according to an embodiment of the present application. As shown in FIG. 2, the method 200 may include following steps.

In S210, the network device performs channel sensing on an unlicensed carrier corresponding to a first direction to evaluate availability of a first time domain resource to be used by the network device for sending the first information.

In S220, the network device sends the first information through the first time domain resource when the first time domain resource is available.

Optionally, when there is a scheduling requirement, the first device may determine the time-frequency resource for data transmission. For example, when the first device determines that the first information needs to be sent, the first device may determine the first time domain resource used for sending the first information. Further, the first device may perform channel sensing to evaluate availability of the first time domain resource to be used for sending the first information. Optionally, the network device may perform channel sensing on the unlicensed carrier corresponding to the first direction, and evaluate availability of the first time domain resource according to a result of the channel sensing.

Optionally, the first information is a downlink reference signal, or the first information is information transmitted on a downlink physical channel.

Optionally, in some embodiments, S210 may include the following steps.

In S211, a count value of a counter is set to N=Ninit, where Ninit is a random number evenly distributed between 0 and CWₚ. Then step S214 is performed.

In S212, if N is greater than zero, the count value of the counter is decremented by 1, that is, N=N-1.

In S213, the network device performs a clear channel assessment (CCA) detection on the channel corresponding to the first direction with a length of Tsi (e.g., the Tsi length is 9us, that is, the CCA slot length is 9us). If the channel sensing result indicates that the channel is idle, step S214 is performed; otherwise, step S215 is performed.

In S214, if N is equal to zero, the channel access procedure is ended; otherwise, step S212 is executed.

In S215, the network device performs CCA detection on the channel corresponding to the first direction with a time length of Td (e.g., T_{d} = 16+mₚ^{∗}9 (us)). The result of the CCA detection indicates that at least one CCA slot is occupied, or all CCA time slots are free.

In S216, if the channel sensing result indicates that all CCA time slots are idle within Td, then step S214 is performed; otherwise, step S215 is performed.

It should be noted that at the end of the channel access procedure, the channel sensing can be considered successful, or in other words, the channel access succeeds. Otherwise, the channel sensing fails, or in other words, the channel access fails. When the channel sensing succeeds, the network device can determine that the first time domain resource for sending the first information is available, and further, can send the first information on the first time domain resource.

In an embodiment, CWₚ and mₚ may be determined according to a channel access priority, as shown in Table 1.

**Table 1**

| channel access priority (*p*) | *mₚ* | *CW_{min, p}* | *CW_{max, p}* | *T_{m cot, p}* | Allowable values of *CWₚ* |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8ms/10 ms | {15,31,63} |
| 4 | 7 | 15 | 1023 | 8ms/10 ms | {15,31,63,127,255,511,1023} |

Where *CW_{min, p}* is the minimum value of CWₚ corresponding to the channel access priority, *CW_{max, p}* is the maximum value of CWₚ corresponding to the channel access priority, and *T_{m cot, p}* is the maximum occupied length of the channel corresponding to the channel access priority.

It should be understood that the channel access parameters shown in Table 1 are only examples without limitation, and the values corresponding to the channel access parameters may be adjusted according to actual conditions, or may include only some of the parameters. Embodiments of the application are not limited thereto.

Optionally, in some embodiments, the network device may also perform a detection with a length of Tone-shot on the unlicensed carrier corresponding to the first direction prior to the first time domain resource for sending the first information. When the channel sensing result indicates the channel is occupied, it is determined that the first time domain resource used for sending the first information is unavailable. Alternatively, it is determined that the first time domain resource used for sending the first information is available when the channel sensing result indicates that the channel is idle. In an embodiment, the length of Tₒₙₑ₋ₛₕₒₜ may be indicated by the network device, or determined according to the service priority, or specified by the communication system. Optionally, the length of Tone-shot is 25 microseconds.

Optionally, before S210, the method 200 may further include a following step.

The network device performs channel sensing on the unlicensed carrier, and a result of the channel sensing indicates that the unlicensed carrier is occupied.

Specifically, the network device may perform channel sensing on the unlicensed carrier as follows. For example, the network device may use an existing channel access mechanism for detection, which may be direction-insensitive or, in other words, may be understood as omnidirectional channel sensing. After the channel sensing is performed for a period, for example, the result of the channel sensing within a first time window indicates that the unlicensed carrier is occupied or, in other word, that the channel on the unlicensed carrier is occupied, it may be considered that the channel sensing fails. In an embodiment, a start position of the first time window may be the time point when the network device starts channel sensing on the unlicensed carrier. This failure may be caused by interference of a signal corresponding to a certain direction. Since the signal corresponding to a certain direction usually only interferes with communication corresponding to a specific direction, the network device may perform channel sensing on the unlicensed carrier corresponding to the first direction, which may be a direction that is not disturbed or has less interference, such that the channel sensing can be performed corresponding to the first direction, thereby facilitating to increase the probability of successful channel sensing. In other words, when the omnidirectional channel sensing fails, the network device can perform channel sensing corresponding to a specific direction, thereby increasing the probability of successful channel sensing.

When the network device adopts a directional signal for transmission, because the directional signal has an additional beamforming gain on the receiving side, the network device may achieve a better result on the receiving side with a relatively small transmission power. According to regional laws and regulations, if the transmission power used by the network device is relatively small, a relatively large threshold can be used for channel listening, thereby increasing the probability of determining that the channel is idle during channel sensing and, thus, increasing the probability of successful channel access. Therefore, optionally, in an embodiment of the present application, a second threshold is greater than or equal to a first threshold, where the first threshold is an energy detection threshold used by the network device to perform channel sensing on the unlicensed carrier, and the second threshold is an energy detection threshold used by the network device to perform channel sensing on the unlicensed carrier corresponding to the first direction.

S210 includes a following step.

The network device performs channel sensing on the unlicensed carrier through a first precoding, where the first precoding corresponds to the first direction.

In an embodiment, the first precoding is a precoding used by the network device as a receiving side for signal reception, and is used for receiving signal energy of the unlicensed carrier corresponding to the first direction. The network device performs channel sensing on the unlicensed carrier by means of the first precoding corresponding to the first direction, thereby achieving channel sensing corresponding to the first direction.

Optionally, in some embodiments, the first information includes a first physical channel, and S220 may include a following step.

The network device sends the first physical channel on the unlicensed carrier through a second precoding and the first time domain resource, where the second precoding corresponds to the first direction.

Specifically, when the network device determines that the first time domain resource is available, the network device sends the first physical channel on the unlicensed carrier through the second precoding and the first time domain resource, wherein the second precoding is a precoding used by the network device as a sending side to send the first physical channel. Both the second precoding and the first precoding correspond to the first direction. Optionally, the second precoding and the first precoding may be the same or different.

In other words, the first precoding is a precoding used by the network device for receiving data, and the second precoding is a precoding used by the network device for sending data. Optionally, the number of precodings used by the network device for receiving signal is M, and the number of precodings used for sending signal is N, and both M and N are integers.

Optionally, M<N, that is, the granularity of the precodings used by the network device for reception is lower than the granularity of the precodings used for transmission. For example, M=4, N=8, the receiving direction of the network device serving as the receiving side includes 4 relatively rough directions, while the network device serving as the sending side can send data corresponding to 8 directions. In other words, pre-coded beams sent by the network device serving as the sending end is finer. Further optionally, one precoding used by the network device for reception may correspond to one or more precodings used for transmission.

Optionally, M>N, that is, the granularity of the precodings used by the network device for reception is higher than the granularity of the precodings used for transmission. For example, M=8, N=4, the receiving direction of the network device serving as the receiving side includes 8 relatively fine directions, while the network device serving as the sending side can send data corresponding to only 4 directions. In other words, pre-coded beams sent by the network device serving as the sending end is rougher. Further optionally, one precoding used by the network device for transmission may correspond to one or more precodings used for reception.

Optionally, M=N, that is, the granularity of the precodings used by the network device for reception is higher than the granularity of the precodings used for transmission, for example, M=4, N=4. Further optionally, the precodings used by the network device for reception may correspond to the precodings used for transmission one by one.

Optionally, in some embodiments, the first information includes a first measurement reference signal, and S220 may include a following step.

The network device sends the first measurement reference signal on the unlicensed carrier through a third precoding and the first time domain resource, where the third precoding does not correspond to the first direction.

In other words, when channel sensing succeeds corresponding to the first direction, the network device can send the first physical channel corresponding to the first direction, and at the same time, can also send the first measurement reference signal on a direction other than the first direction, for example, on a second direction.

Optionally, in some embodiments, the network device may also send the first measurement reference signal corresponding to the first direction. In other words, the network device sends the first physical channel corresponding to the first direction, and also sends the first measurement reference signal corresponding to the first direction.

Optionally, in an embodiment of the present application, the first measurement reference signal may be a reference signal with a high priority and a short transmission time, such as SSB or CSI-RS.

For example, as shown in FIG. 3, when the network device determines that the first information needs to be sent, it can perform channel sensing on the unlicensed carrier corresponding to the first direction. The specific process may refer to the relevant description in S210. At the end of channel access procedure, the channel sensing may be considered successful, so that it can be determined that the first time domain resource for sending the first information is available. Then the network device can transmit the physical channel through the first time domain resource corresponding to the first direction, and at the same time, the network device may also send the measurement reference signal through the first time domain resource corresponding to the first direction. Optionally, the network device may also send the measurement reference signal through the first time domain resource corresponding to a direction other than the first direction, for example, the second direction.

In some embodiments, S210 includes a following step.

The network device performs channel sensing on the unlicensed carrier corresponding to the first direction according to at least one of:
a service priority corresponding to the first direction (optional), a transmission power corresponding to the first direction (optional), an energy detection threshold corresponding to the first direction, and a time length for data transmission corresponding to the first direction (optional).

For example, the network device may determine the channel access parameters used for channel sensing according to the service priority corresponding to the first direction, that is, the channel access parameters CWₚ and mₚ may be determined according to the service priority in the corresponding direction as shown in Table 1. Further, channel sensing can be performed according to the channel access parameters. Optionally, the service priorities corresponding to different directions may be independently determined, that is, the service priorities corresponding to different directions may be the same or different.

Optionally, in an embodiment of the present application, the transmission powers corresponding to different directions may also be independently determined by the network device, that is, the transmission powers corresponding to different directions may be the same, or may also be different.

Optionally, in an embodiment of the present application, the energy detection thresholds corresponding to different directions may be determined according to the transmission powers of the network device in corresponding directions.

For example, if a good result can be achieved at the receiving side even if a relatively small transmission power is used by the network device. Then, when the transmission power used by the network device is relatively small, a relatively large energy detection threshold can be used when performing channel sensing, thereby increasing the probability of successful channel access.

Optionally, in an embodiment of the present application, the time lengths for data transmission corresponding to different directions may also be independently determined by the network device, that is, the time lengths for data transmission corresponding to different directions may be the same or different.

Optionally, in some embodiments, the method 200 may further include following steps.

The network device performs channel sensing on the unlicensed carrier corresponding to a second direction to evaluate availability of a second time domain resource used by the network device to send second information.

When the second time domain resource is available, the network device sends the second information through the second time domain resource.

It should be understood that the process of channel sensing on the unlicensed carrier performed by the network device corresponding to the second direction may refer to the implementation process of channel sensing on the unlicensed carrier performed by the network device corresponding to the first direction. For the sake of brevity, it will be not repeated here.

Optionally, the network device may perform channel sensing on the unlicensed carrier corresponding to the second direction by a following step.

The network device performs channel sensing on the unlicensed carrier corresponding to the second direction according to at least one of:
a service priority corresponding to the second direction, a transmission power corresponding to the second direction, an energy detection threshold corresponding to the second direction, and a time length for data transmission corresponding to the second direction.

In an embodiment, the service priority corresponding to the second direction and the service priority corresponding to the first direction may be independently determined. Therefore, the service priority corresponding to the first direction and the service priority corresponding to the second direction may be the same or different. Similarly, the transmission power corresponding to the second direction, the energy detection threshold corresponding to the second direction, and the time length for data transmission corresponding to the second direction may also be independently determined, which will be not repeated here.

Optionally, in some embodiments, before the network device performs channel sensing on the unlicensed carrier corresponding to the second direction, the method 200 further includes a following step.

The network device performs channel sensing on the unlicensed carrier corresponding to the first direction, and a result of the channel sensing indicates that the unlicensed carrier is occupied corresponding to the first direction.

Specifically, the network device may perform channel sensing on the unlicensed carrier corresponding to the first direction. After the channel sensing is performed for a period of time, for example, the result of channel sensing within a second time window indicates that the unlicensed carrier is occupied corresponding to the first direction, that is, the channel sensing fails corresponding to the first direction, the network device may perform channel sensing on the unlicensed carrier corresponding to a direction other than the first direction, for example, the second direction, so as to evaluate availability of the time-frequency resource for transmitting information, thereby increasing the probability of successful channel sensing. A starting position of the second time window is a time point when the network device starts channel sensing on the unlicensed carrier corresponding to the first direction.

Optionally, in an embodiment of the present application, if the network device does not complete the channel sensing process for the unlicensed carrier corresponding to the first direction within the second time window, the network device may perform channel sensing on the unlicensed carrier corresponding to the second direction. In an embodiment, the network device may regenerate channel access parameters according to the channel access priority corresponding to the second direction, and perform channel sensing on the unlicensed carrier corresponding to the second direction.

Optionally, in an embodiment of the present application, if the network device does not complete the channel sensing process for the unlicensed carrier corresponding to the first direction within the second time window, the network device may perform channel sensing on the unlicensed carrier corresponding to the second direction. In an embodiment, the manner of performing channel sensing on the unlicensed carrier corresponding to the second direction may be determined according to at least one of the following manners.

In a 1^{st} manner, if the channel access priority corresponding to the second direction and the channel access priority corresponding to the first direction are the same, the network device performs channel sensing on the unlicensed carrier corresponding to the second direction subsequent to performing channel sensing on the unlicensed carrier corresponding to the first direction.

In an embodiment, the channel access priority corresponding to the first direction is determined by the priority of the service to be transmitted corresponding to the first direction, and the channel access priority corresponding to the second direction is determined by the priority of the service to be transmitted corresponding to the second direction.

If the channel access priority corresponding to the second direction is the same as the channel access priority corresponding to the first direction, the network device performing channel sensing on the unlicensed carrier corresponding to the second direction may continue to use the channel access parameters used by the network device performing channel sensing on the unlicensed carrier corresponding to the first direction. For example, if channel sensing is performed on the unlicensed carrier corresponding to the first direction, the generated random number Ninit is 10, and when N is reduced from 10 to 5, the second time window times out and the channel sensing fails, then the network device performs channel sensing on the unlicensed carrier corresponding to the second direction from N=5, that is, the channel sensing on the unlicensed carrier is continued corresponding to the second direction.

In a 2^{nd} manner, if the channel access priority corresponding to the second direction is higher than the channel access priority corresponding to the first direction, the network device performs channel sensing on the unlicensed carrier corresponding to the second direction subsequent to performing channel sensing on the unlicensed carrier corresponding to the first direction, or the network device restarts channel sensing on the unlicensed carrier corresponding to the second direction.

For example, when the channel access priority corresponding to the second direction is higher than the channel access priority corresponding to the first direction, the network device may continue to perform channel sensing on the unlicensed carrier corresponding to the second direction by using the channel access parameters used by the network device to perform channel sensing on the unlicensed carrier corresponding to the first direction, or the channel access parameters may also be regenerated. For example, when the channel sensing is performed on the unlicensed carrier corresponding to the first direction, the generated random number Ninit is 10, and when N is reduced from 10 to 5, the second time window times out and the channel sensing fails. When performing channel sensing on the unlicensed carrier corresponding to the second direction, the channel sensing can be performed from N=5. Alternatively, due to the higher channel access priority corresponding to the second direction, the probability that the random number generated corresponding to the second direction is smaller than the random number generated corresponding to the first direction is relatively greate, so the network device may also regenerate the random number Ninit, and perform channel sensing according to the regenerated Ninit.

In a 3^{rd} manner, if the channel access priority corresponding to the second direction is lower than the channel access priority corresponding to the first direction, the network device restarts the channel sensing on the unlicensed carrier corresponding to the second direction.

For example, when the channel access priority corresponding to the second direction is lower than the channel access priority corresponding to the first direction, since the channel access priority corresponding to the second direction is lower, the random number generated according to the channel access priority corresponding to the first direction cannot be shared. Therefore, the network device needs to regenerate the channel access parameters and, then, performs channel sensing according to the regenerated channel access parameters.

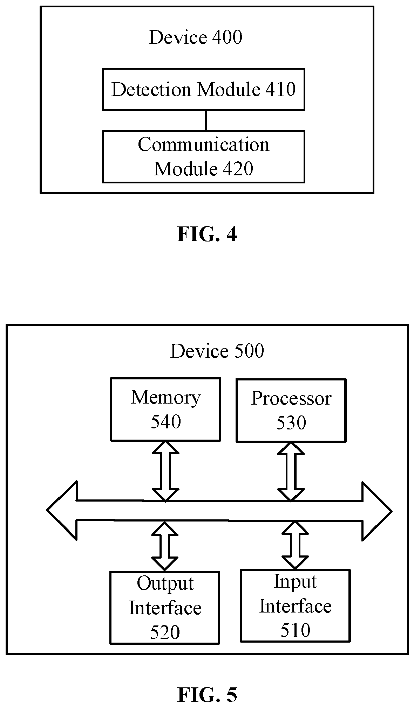

The method embodiments of the present application are described in detail above with reference to FIGs. 2 to 3. The device embodiments of the present application will be described in detail below with reference to FIGs. 4 to 5. It should be understood that the device embodiments and the method embodiments correspond to each other and, thus, similar description may refer to the method embodiments.

FIG. 4 is a block diagram illustrating a device for transmitting information according to an embodiment of the present application. The device 400 of FIG. 4 includes:
a detection module 410, configured to perform channel sensing on the unlicensed carrier corresponding to the first direction to evaluate availability of the first time domain resource used by the device to send the first information; and
a communication module 420, configured to send the first information through the first time domain resource when the first time domain resource is available. Specifically, the device 400 may correspond to (for example, may be configured in or itself is) the first device described in the above method 200, and each module or unit in the device 400 is configured to perform the actions or processing procedures, respectively, that are performed by the first device in the above method 200. Detailed description will be omitted here to avoid repetition.

As shown in FIG. 5, an embodiment of the present application further provides a device 500, and the device 500 may be the device 400 in FIG. 4, which can be configured to execute operations of the network device corresponding to the method 200 in FIG. 2. The device 500 includes an input interface 510, an output interface 520, a processor 530, and a memory 540. The input interface 510, the output interface 520, the processor 530, and the memory 540 may be connected through a bus system. The memory 540 is configured to store programs, instructions or codes. The processor 530 is configured to execute programs, instructions, or codes in the memory 540 to control the input interface 510 to receive signals, control the output interface 520 to send signals, and complete operations in the foregoing method embodiments.

It should be understood that, in the embodiments of the present application, the processor 530 may be a central processing unit ("CPU"), and the processor 530 may also be other general-purpose processors or digital signal processors (DSP), application specific integrated circuit (ASIC), field programmable gate array (FPGA) or other programmable logic devices, discrete gates or transistor logic devices, discrete hardware components, or the like. The general-purpose processor may be a microprocessor or the processor may also be any conventional processor or the like.

The memory 540 may include a read-only memory and a random access memory, and provide instructions and data to the processor 530. A portion of the memory 540 may also include non-volatile random access memory. For example, the memory 540 may also store information on the type of device.

In the implementation process, content of the above method may be completed by an integrated logic circuit of hardware in the processor 530 or instructions in the form of software. The content of the method disclosed in conjunction with the embodiments of the present application may be directly embodied and completed by a hardware processor, or may be implemented and completed by a combination of hardware and software modules in the processor. The software module may be located in a mature storage medium in the art, such as random access memory, flash memory, read-only memory, programmable read-only memory, electrically erasable programmable memory, or registers. The storage medium may be located in the memory 540, and the processor 530 reads the information from the memory 540 and completes the content of the above method in combination with its hardware. In order to avoid repetition, details thereof are not described here.

In a specific embodiment, the detection module 410 included in the device 400 in FIG. 4 may be implemented by the processor 530 in FIG. 5, and the communication module 420 included in the device 400 in FIG. 4 may be implemented by the input interface 510 and the output interface 520 described in FIG. 5.

Embodiments of the present application also provide a computer-readable storage medium that stores one or more programs, the one or more programs include instructions. The instructions may cause, when executed by a portable electronic device that includes multiple application programs, the portable electronic device to implement the method according to the embodiments shown in FIGs. 2 to 3.

An embodiment of the present application also proposes a computer program including instructions. The computer program may cause, when executed by a computer, the computer to implement the corresponding flow of the method the embodiments shown in FIGs. 2 to 3.

Those of ordinary skill in the art may realize that the units and algorithm steps of the examples described in conjunction with the embodiments disclosed herein can be implemented by electronic hardware, or a combination of computer software and electronic hardware. Whether these functions are executed in hardware or software depends on the specific application of the technical solution and design constraints. Those of ordinary skill in the art can use different manners to implement the described functions for each specific application, but such implementation should not be considered beyond the scope of this application.

Those skilled in the art can clearly understand that for the convenience and conciseness of the description, the specific working process of the system, device and unit described above may refer to the corresponding process in the foregoing method embodiments, which will not be repeated here.

In the several embodiments provided in this application, it should be understood that the disclosed system, device, and method may be implemented in other manners. For example, the device embodiments described above are only schematic. For example, the division of the units is only a logical function division, and there may be other divisions in actual implementation, for example, multiple units or components may be combined with each other or may be integrated into another system, or some features can be ignored or not implemented. In addition, the displayed or discussed mutual coupling or direct coupling or communication connection may be indirect coupling or communication connection through some interfaces, devices or units, and may be in electrical, mechanical, or other forms.

The units described as separate components may be or may not be physically separated, and the components displayed as units may be or may not be physical units. In other words, they may be located in one place, or may be distributed at multiple network units. Some or all of the units may be selected according to actual needs to achieve the purpose of the solution of this embodiment.

In addition, each functional unit in each embodiment of the present application may be integrated into one processing unit, or each unit may exist alone physically, or two or more units may be integrated into one unit.

If the function is implemented in the form of a software functional unit and sold or used as an independent product, it can be stored in a computer-readable storage medium. Based on such an understanding, the technical solution of the present application may be essentially or a part that contributes to the prior art or a part of the technical solution may be embodied in the form of a software product, and the computer software product is stored in a storage medium, including several instructions to enable a computer device (which may be a personal computer, server, network device, or the like) to perform all or part of the steps of the methods described in the embodiments of the present application. The foregoing storage medium may include U disk, mobile hard disk, read-only memory (ROM), random access memory (RAM), magnetic disk or optical disk and other media that can store program codes .

The above is only the specific implementation of this application, but the protection scope of this application is not limited thereto. Those skilled in the art can easily think of changes or replacements within the technical scope disclosed in this application. It should be covered by the protection scope of this application. Therefore, the protection scope of the present application shall be subject to the protection scope of the claims.

## Claims

1. A method for transmitting information, **characterized in** comprising:
performing (S210), by a network device (120), channel sensing on an unlicensed carrier through a first precoding corresponding to a first direction being a first beam direction and according to an energy detection threshold corresponding to the first direction, to evaluate availability of a first time domain resource to be used by the network device for sending first information; and
sending (S220), by the network device, the first information through the first time domain resource when the first time domain resource is available.

2. The method according to claim 1, wherein before performing, by the network device, channel sensing on the unlicensed carrier corresponding to the first direction, the method further comprises:
performing, by the network device, channel sensing on the unlicensed carrier, and a result of the channel sensing indicates that the unlicensed carrier is occupied.

3. The method according to claim 1 or 2, wherein the first information comprises a first physical channel, and sending, by the network device, the first information through the first time domain resource comprises:
sending, by the network device, the first physical channel on the unlicensed carrier through a second precoding and the first time domain resource, wherein the second precoding corresponds to the first direction.

4. The method according to any one of claims 1 to 3, wherein the first information comprises a first measurement reference signal, and sending, by the network device, the first information through the first time domain resource comprises:
sending, by the network device, the first measurement reference signal on the unlicensed carrier through a third precoding and the first time domain resource, wherein the third precoding does not correspond to the first direction.

5. The method according to any one of claims 1 to 4, further comprising:
performing, by the network device, channel sensing on the unlicensed carrier corresponding to a second direction to evaluate availability of a second time domain resource to be used by the network device for sending second information; and
sending, by the network device, the second information through the second time domain resource when the second time domain resource is available.

6. The method according to claim 5, wherein performing, by the network device, channel sensing on the unlicensed carrier corresponding to the second direction comprises:
performing, by the network device, channel sensing on the unlicensed carrier corresponding to the second direction according to at least one of:
a service priority corresponding to the second direction, a transmission power corresponding to the second direction, an energy detection threshold corresponding to the second direction, and a time length for data transmission corresponding to the second direction.

7. A network device (110) for transmitting information, **characterized in** comprising:
detection module (410), configured to perform channel sensing on an unlicensed carrier through a first precoding corresponding to a first direction being a first beam direction and according to an energy detection threshold corresponding to the first direction, to evaluate availability of a first time domain resource to be used by the device for sending first information; and
communication module (420), configured to send the first information through the first time domain resource when the first time domain resource is available.

8. The network device according to claim 7, wherein the detection module is further configured to:
perform, before performing channel sensing on the unlicensed carrier corresponding to the first direction, channel sensing on the unlicensed carrier, wherein a result of the channel sensing indicates that the unlicensed carrier is occupied.

9. The network device according to claim 7 or 8, wherein the first information comprises a first physical channel, and the communication module is specifically configured to:
send the first physical channel on the unlicensed carrier through a second precoding and the first time domain resource, wherein the second precoding corresponds to the first direction.

10. The network device according to any one of claims 7 to 9, wherein the detection module is further configured to:
perform channel sensing on the unlicensed carrier corresponding to a second direction to evaluate availability of a second time domain resource to be used by the network device for sending second information; and
the communication module is further configured to:
send the second information through the second time domain resource when the second time domain resource is available.

11. The network device according to claim 10, wherein the detection module is further configured to:
perform channel sensing on the unlicensed carrier corresponding to the second direction according to at least one of:
a service priority corresponding to the second direction, a transmission power corresponding to the second direction, an energy detection threshold corresponding to the second direction, and a time length for data transmission corresponding to the second direction.

## Patentansprüche

1. Verfahren zum Übertragen von Informationen, **dadurch gekennzeichnet, dass** es Folgendes umfasst:
Durchführen (S210) einer Kanalprüfung auf einem unlizenzierten Träger durch eine erste Vorcodierung in Übereinstimmung mit einer ersten Richtung, bei der es sich um eine erste Strahlrichtung handelt, und in Abhängigkeit von einem Energiedetektionsschwellenwert in Übereinstimmung mit der ersten Richtung durch ein Netzgerät (120), um die Verfügbarkeit einer von dem Netzgerät zum Senden erster Informationen zu nutzenden ersten Zeitbereichsressource zu bewerten; und
Senden (S220) der ersten Informationen durch die erste Zeitbereichsressource durch das Netzgerät, wenn die erste Zeitbereichsressource verfügbar ist.

2. Verfahren nach Anspruch 1, wobei das Verfahren vor dem Durchführen einer Kanalprüfung auf dem unlizenzierten Träger in Übereinstimmung mit der ersten Richtung durch das Netzgerät ferner Folgendes umfasst:
Durchführen einer Kanalprüfung auf dem unlizenzierten Träger durch das Netzgerät, wobei ein Ergebnis der Kanalprüfung anzeigt, dass der unlizenzierte Träger belegt ist.

3. Verfahren nach Anspruch 1 oder 2, wobei die ersten Informationen einen ersten physikalischen Kanal umfassen und das Senden der ersten Informationen durch die erste Zeitbereichsressource durch das Netzgerät Folgendes umfasst:
Senden des ersten physikalischen Kanals auf dem unlizenzierten Träger durch eine zweite Vorcodierung und die erste Zeitbereichsressource durch das Netzgerät, wobei die zweite Vorcodierung mit der ersten Richtung übereinstimmt.

4. Verfahren nach einem der Ansprüche 1 bis 3, wobei die ersten Informationen ein erstes Messbezugssignal umfassen und das Senden der ersten Informationen durch die erste Zeitbereichsressource durch das Netzgerät Folgendes umfasst:
Senden des ersten Messbezugssignals auf dem unlizenzierten Träger durch eine dritte Vorcodierung und die erste Zeitbereichsressource durch das Netzgerät, wobei die dritte Vorcodierung nicht mit der ersten Richtung übereinstimmt.

5. Verfahren nach einem der Ansprüche 1 bis 4, das ferner Folgendes umfasst:
Durchführen einer Kanalprüfung auf dem unlizenzierten Träger in Übereinstimmung mit einer zweiten Richtung durch das Netzgerät, um die Verfügbarkeit einer vom Netzgerät zum Senden zweiter Informationen zu nutzenden zweiten Zeitbereichsressource zu bewerten; und
Senden der zweiten Informationen durch die zweite Zeitbereichsressource durch das Netzgerät, wenn die zweite Zeitbereichsressource verfügbar ist.

6. Verfahren nach Anspruch 5, wobei das Durchführen einer Kanalprüfung auf dem unlizenzierten Träger in Übereinstimmung mit der zweiten Richtung durch das Netzgerät Folgendes umfasst:
Durchführen einer Kanalprüfung auf dem unlizenzierten Träger in Übereinstimmung mit der zweiten Richtung durch das Netzgerät in Abhängigkeit von mindestens einem von Folgendem:
einer mit der zweiten Richtung übereinstimmenden Dienstpriorität, einer mit der zweiten Richtung übereinstimmenden Sendeleistung, einem mit der zweiten Richtung übereinstimmenden Energiedetektionsschwellenwert und einer mit der zweiten Richtung übereinstimmenden Datenübertragungsdauer.

7. Netzgerät (110) zum Übertragen von Informationen, **dadurch gekennzeichnet, dass** es Folgendes umfasst:
Detektionsmodul (410), das konfiguriert ist, um eine Kanalprüfung auf einem unlizenzierten Träger durch eine erste Vorcodierung in Übereinstimmung mit einer ersten Richtung, bei der es sich um eine erste Strahlrichtung handelt, und in Abhängigkeit von einem Energiedetektionsschwellenwert in Übereinstimmung mit der ersten Richtung durchzuführen, um die Verfügbarkeit einer von dem Gerät zum Senden erster Informationen zu nutzenden ersten Zeitbereichsressource zu bewerten; und
Kommunikationsmodul (420), das konfiguriert ist, um die ersten Informationen durch die erste Zeitbereichsressource zu senden, wenn die erste Zeitbereichsressource verfügbar ist.

8. Netzgerät nach Anspruch 7, wobei das Detektionsmodul ferner zu Folgendem konfiguriert ist:
vor dem Durchführen einer Kanalprüfung auf dem unlizenzierten Träger in Übereinstimmung mit der ersten Richtung Durchführen einer Kanalprüfung auf dem unlizenzierten Träger, wobei ein Ergebnis der Kanalprüfung anzeigt, dass der unlizenzierte Träger belegt ist.

9. Netzgerät nach Anspruch 7 oder 8, wobei die ersten Informationen einen ersten physikalischen Kanal umfassen und das Kommunikationsmodul speziell zu Folgendem konfiguriert ist:
Senden des ersten physikalischen Kanals auf dem unlizenzierten Träger durch eine zweite Vorcodierung und die erste Zeitbereichsressource, wobei die zweite Vorcodierung mit der ersten Richtung übereinstimmt.

10. Netzgerät nach einem der Ansprüche 7 bis 9, wobei das Detektionsmodul ferner zu Folgendem konfiguriert ist:
Durchführen einer Kanalprüfung auf dem unlizenzierten Träger in Übereinstimmung mit einer zweiten Richtung, um die Verfügbarkeit einer von dem Netzgerät zum Senden zweiter Informationen zu nutzenden zweiten Zeitbereichsressource zu bewerten; und
wobei das Kommunikationsmodul ferner zu Folgendem konfiguriert sind:
Senden der zweiten Informationen durch die zweite Zeitbereichsressource, wenn die zweite Zeitbereichsressource verfügbar ist.

11. Netzgerät nach Anspruch 10, wobei das Detektionsmodul ferner zu Folgendem konfiguriert ist:
Durchführen einer Kanalprüfung auf dem unlizenzierten Träger in Übereinstimmung mit der zweiten Richtung in Abhängigkeit von mindestens einem von Folgendem:
einer mit der zweiten Richtung übereinstimmenden Dienstpriorität, einer mit der zweiten Richtung übereinstimmenden Sendeleistung, einem mit der zweiten Richtung übereinstimmenden Energiedetektionsschwellenwert und einer mit der zweiten Richtung übereinstimmenden Datenübertragungsdauer.

## Revendications

1. Procédé de transmission d'informations, **caractérisé en ce qu'**il comprend de :
exécuter (S210), par un dispositif de réseau (120), une détection de canal sur une porteuse sans licence par le biais d'un premier précodage correspondant à une première direction qui est une première direction de faisceau et selon un seuil de détection d'énergie correspondant à la première direction, pour évaluer la disponibilité d'une première ressource de domaine temporel à utiliser par le dispositif de réseau pour envoyer de premières informations ; et
envoyer (S220), par le dispositif de réseau, les premières informations par l'intermédiaire de la première ressource de domaine temporel lorsque la première ressource de domaine temporel est disponible.

2. Procédé selon la revendication 1, dans lequel avant d'effectuer, par le dispositif de réseau, une détection de canal sur la porteuse sans licence correspondant à la première direction, le procédé comprend en outre de :
effectuer, par le dispositif de réseau, une détection de canal sur la porteuse sans licence, et un résultat de la détection de canal indique que la porteuse sans licence est occupée.

3. Procédé selon la revendication 1 ou 2, dans lequel les premières informations comprennent un premier canal physique, et l'envoi, par le dispositif de réseau, des premières informations par l'intermédiaire de la première ressource de domaine temporel comprend de :
envoyer, par le dispositif de réseau, le premier canal physique sur la porteuse sans licence par le biais d'un deuxième précodage et de la première ressource de domaine temporel, dans lequel le deuxième précodage correspond à la première direction.

4. Procédé selon l'une quelconque des revendications 1 à 3, dans lequel les premières informations comprennent un premier signal de référence de mesure, et l'envoi, par le dispositif de réseau, des premières informations par l'intermédiaire de la première ressource de domaine temporel comprend de :
envoyer, par le dispositif de réseau, le premier signal de référence de mesure sur la porteuse sans licence par le biais d'un troisième précodage et de la première ressource de domaine temporel, dans lequel le troisième précodage ne correspond pas à la première direction.

5. Procédé selon l'une quelconque des revendications 1 à 4, comprenant en outre de :
exécuter, par le dispositif de réseau, une détection de canal sur la porteuse sans licence correspondant à une deuxième direction pour évaluer la disponibilité d'une deuxième ressource de domaine temporel à utiliser par le dispositif de réseau pour envoyer de deuxièmes informations ; et
envoyer, par le dispositif de réseau, les deuxièmes informations par l'intermédiaire de la deuxième ressource de domaine temporel lorsque la deuxième ressource de domaine temporel est disponible.

6. Procédé selon la revendication 5, dans lequel l'exécution, par le dispositif de réseau, de la détection de canal sur la porteuse sans licence correspondant à la deuxième direction comprend de :
effectuer, par le dispositif de réseau, une détection de canal sur la porteuse sans licence correspondant à la deuxième direction selon au moins l'un des éléments suivants :
une priorité de service correspondant à la deuxième direction, une puissance de transmission correspondant à la deuxième direction, un seuil de détection d'énergie correspondant à la deuxième direction, et une durée de transmission de données correspondant à la deuxième direction.

7. Dispositif de réseau (110) pour transmettre des informations, **caractérisé en ce qu'**il comprend :
un module de détection (410), configuré pour effectuer une détection de canal sur une porteuse sans licence par le biais d'un premier précodage correspondant à une première direction qui est une première direction de faisceau et selon un seuil de détection d'énergie correspondant à la première direction, pour évaluer la disponibilité d'une première ressource de domaine temporel à utiliser par le dispositif pour envoyer de premières informations ; et
un module de communication (420), configuré pour envoyer les premières informations par l'intermédiaire de la première ressource de domaine temporel lorsque la première ressource de domaine temporel est disponible.

8. Dispositif de réseau selon la revendication 7, dans lequel le module de détection est en outre configuré pour :
effectuer, avant d'effectuer une détection de canal sur la porteuse sans licence correspondant à la première direction, une détection de canal sur la porteuse sans licence, dans lequel un résultat de la détection de canal indique que la porteuse sans licence est occupée.

9. Dispositif de réseau selon la revendication 7 ou 8, dans lequel les premières informations comprennent un premier canal physique, et le module de communication est spécifiquement configuré pour :
envoyer le premier canal physique sur la porteuse sans licence par le biais d'un deuxième précodage et de la première ressource de domaine temporel, dans lequel le deuxième précodage correspond à la première direction.

10. Dispositif de réseau selon l'une quelconque des revendications 7 à 9, dans lequel le module de détection est en outre configuré pour :
effectuer une détection de canal sur la porteuse sans licence correspondant à une deuxième direction pour évaluer la disponibilité d'une deuxième ressource de domaine temporel à utiliser par le dispositif de réseau pour envoyer de deuxièmes informations ; et
le module de communication est en outre configuré pour : envoyer les deuxièmes informations par l'intermédiaire de la deuxième ressource de domaine temporel lorsque la deuxième ressource de domaine temporel est disponible.

11. Dispositif de réseau selon la revendication 10, dans lequel le module de détection est en outre configuré pour :
effectuer une détection de canal sur la porteuse sans licence correspondant à la deuxième direction selon au moins l'un des éléments suivants :
une priorité de service correspondant à la deuxième direction, une puissance de transmission correspondant à la deuxième direction, un seuil de détection d'énergie correspondant à la deuxième direction, et une durée de transmission de données correspondant à la deuxième direction.
